# EUROPEAN PATENT APPLICATION

(11) **EP 4 407 138 A1**
(43) Date of publication of application: **31.07.2024**
(21) Application number: 23153742.4
(22) Date of filing: 27.01.2023
(51) Int. Cl.: E06B 9/58, E06B 9/88, G01D 11/30, G01V 8/10

(54) **MOUNTING OF A LIGHT CURTAIN**

(71) Applicant: Alpha Deuren International BV, 6942 GB Didam (NL)
(72) Inventor: KOETSIER, Dennis, 6942 LK Didam (NL)
(74) Representative: Andrejewski - Honke Patent- und Rechtsanwälte Partnerschaft mbB

(57) **Abstract**

The invention discloses a door frame for an upwardly opening door with a frame profile (1) having a plurality of retaining portions (4) which are separate from and spaced apart from one another and which extends along a longitudinal direction of the profile (1), with at least one receiving element (7) which is to be arranged by a form fit on at least one associated retaining portion (4) and with a functional element (3) which can be connected to the receiving element (7) in order to be fastened to the frame profile (1).

## Description

The invention relates to a door frame for upwardly opening doors which are used, for example, for closing garages, halls or also in comparable industrial applications. The invention also relates to a corresponding door with a door frame.

The gate comprises a closure member which can be transferred from an open position to a closed position and vice versa and which can be formed, for example, in the form of a swinging leaf, a curtain, adjoining panels or articulated sections. In the closed position, the closure member is oriented vertically or substantially vertically in order to close a door opening. An opening movement then occurs in a vertical direction, whereby a lower closure edge of the closure member is then moved upwards. In doing so, the closure member can be moved straight upwards in a rigid design or also pivoted into a substantially horizontal opening position above the door opening.

A curtain, adjoining panels or articulated sections can be wound up in several directly adjoining layers or also rolled up through a spiral guide without direct contact of the layers. Furthermore, it is possible to transfer a flexible closure member or one formed by panels or sections into a plane, in particular a horizontal opening position above the door opening. In the case of an opposite closing movement, it is known that the door opening is monitored by a safety device so that collision with an obstacle is avoided. For example, it is known to monitor the door opening along the path of the closure member by suitable means, for example in the form of a light beam or a light grid. If an obstacle is detected by such a safety device, the closure member can be stopped before reaching the obstacle or a closing movement can be blocked from the outset by a suitable control system.

The present invention is concerned with the attachment of a functional element, for example in the form of a light curtain, to a frame. In addition to light in the visible or infrared range, other electromagnetic or acoustic radiation can of course also be considered for monitoring. Monitoring can be carried out, for example, by forming a monitoring area with transmitter and receiver units on both sides of the closure member, whereby an obstacle then interrupts corresponding radiation in the line of sight between the transmitter and receiver units. In principle, depending on the design, it is also possible that a functional element for forming a monitoring device is only arranged on one side, which can then detect the backscattering by an obstacle, for example.

Door frames of garage and industrial doors are often formed by a simple frame profile made of sheet metal. In this context, various fastening options are known from the prior art for fastening a functional element, for example in the form of a monitoring device, to the frame profile.

WO 2006/0051327 A2 discloses a strip-shaped functional element in the form of a light curtain, which can be easily fastened to a leg of a frame profile by means of several clamps spaced apart in the vertical direction. This results in a particularly simple assembly, although a special frame shape with a suitable leg must be provided. Furthermore, the individual clips - even in a barbed design - can be released when force is applied in the horizontal direction, so that an accidental release of the clips or the functional element held with them cannot be ruled out, for example in the case of a mechanical impact on the functional element.

From US 5938019 a door frame with a frame profile is known, to which a functional element, for example in the form of a light barrier, can be fastened via a receiving element. The receiving element has a comparatively complicated sheet metal structure which is precisely adapted to the shape of the frame and which can be placed on the side and locked in place.

From DE 10 2013 100 311 B4, DE 20 2011 000 762 U1, DE 10 2011 001 724 A1, DE 10 2005 059 200 A1, DE 10 2006 009 713 A1 and DE 20 2005 000 271 A1 door frames are known on which functional elements can be screwed directly or with a receiving element to a frame profile. The assembly must therefore be carried out with tools and a certain amount of effort, whereby fastening screws then extend through the frame profile and in particular protrude on a rear side of the frame profile.

According to DE 10 2018 104 314 A1, in a door frame, a frame profile is provided with openings, whereby photoelectric sensor elements of precisely adapted size can then be used. The use of a simple, pre-configured light curtain strip or the like is not possible.

According to EP 3 244 001 A1, a light curtain strip can be mounted by means of clamping parts, whereby the clamping parts must be adapted in their shape to the frame on the one hand and to the light curtain strip on the other. The The clamping pieces can be tightened by means of a screw, which results in a certain amount of assembly work.

The present invention is based on the task of specifying a door frame which can be equipped with a functional element, in particular a monitoring device, in a particularly simple and reliable manner. Furthermore, a door with such a door frame is also to be specified.

The object of the invention and the solution to the problem are a door frame according to patent claim 1 and a door according to patent claim 12.

Accordingly, the invention relates to a door frame having a frame profile which has a multiplicity of retaining portions which are separate from one another and spaced apart from one another and which extends along a longitudinal direction of the profile, having at least one receiving element which is to be arranged by a form fit on at least one associated retaining portion, and having a functional element which can be connected to the receiving element in order to be fastened to the frame profile.

According to the invention, it is thus first provided that the frame profile itself has a plurality of retaining portions which are preferably identical to one another and to which the functional element can be indirectly fastened via at least one receiving element and preferably a plurality of receiving elements to the frame profile. The retaining portions can, for example, be designed as retaining legs running along a longitudinal direction of the profile from a leg base to a free end, in which case the free end is directed upwards in an assembly position. An associated receiving element can then be easily inserted into such retaining legs. The advantage of this is that the leg foot provides downward support, so that additional securing is provided by the weight force.

According to a common design, the frame profile can be made of sheet metal. The retaining portions can then be easily formed by sheet metal forming. In particular, it is possible that retaining legs are created by a stamping process. In a simple manner, the retaining portions can then be formed, in particular in the form of individual retaining legs, from the material of the frame profile itself, i.e. in particular sheet metal. The retaining legs then extend expediently on a front side of the frame profile, on which the functional element is also to be arranged. An opposite rear side of the frame profile is then flat or essentially flat, which is usually not the case when it is mounted with screws, for example. The frame can, for example, also be formed from several, in particular two, adjoining profiles without screws protruding from the rear causing any problems.

Retaining portions in the form of retaining legs can be designed differently by sheet metal forming. Expediently, it may be provided, for example, that an insertion inclination is provided at the free end in order to enable easy arrangement of the retaining elements. Following such an insertion slope, a narrow section can also be provided, for example, in order to create a certain clamping effect. Especially in the case of a design made of the sheet metal of the frame profile itself, reinforcing beads or other structures can also be easily created in a stamping process.

In principle, it is conceivable that each receiving element is supported by exactly one associated retaining portion. According to a preferred embodiment of the invention, however, it is envisaged that the receiving portions of each are supported by two retaining portions, so that a particularly reliable support and simple assembly results.

Against this background, it can be provided that the frame profile has several pairs of retaining portions along the longitudinal direction of the profile (i.e. in the assembled state, usually approximately along the vertical direction), in order to be able to support one receiving element each at the corresponding positions.

The individual positions can be distributed equidistantly along the length, whereby the distance along the longitudinal direction of the profile, for example from one leg base to the next leg base, can be between 20 cm and 100 cm. An equidistant arrangement is particularly useful if the frame profile is provided universally and then cut to a desired dimension. In principle, however, it is also possible to provide special heights in relation to the final installation position - if necessary also with a non-equidistant arrangement.

If, according to a preferred embodiment of the invention, the retaining portions of a sheet metal frame profile are formed by sheet metal forming, then several frame profiles can be stacked on top of each other before assembly. The retaining portions usually have a free space on the back in which the retaining portion of an adjacent frame profile can engage. If necessary, this can also result in improved transport safety because several frame profiles stacked on top of each other are then secured against slipping.

When the retaining portions are arranged in pairs, they have a suitable spacing transverse to the longitudinal direction of the profile, which can usefully be determined as a free space from edge to edge. The distance determined in this way can, for example, be in a range of 4 cm to 14 cm.

In the case of a design as retaining legs, these can, for example, have a length of 1 cm and 5 cm along the longitudinal direction of the profile and a width of between 1 cm and 5 cm transversely thereto. The dimensions are to be determined taking into account the manufacturing effort and the desired stability, whereby the manageability during assembly is also to be taken into account in such a determination.

The at least one receiving element is intended to support the functional element alone or preferably with other receiving elements of the same design. In a particularly simple and practical design, the at least one receiving element has a receiving slot for this purpose, into which the functional element can be inserted. Even if other materials can be considered in principle, plastic is particularly suitable for the receiving element, which enables a particularly simple shaping. The receiving element comprising differently shaped portions can, for example, be formed as an injection-moulded part, but additive manufacturing processes such as 3D printing, milling or the like can also be considered. A plastic with sufficient hardness, durability and resistance is useful.

If, in accordance with the preferred design variants described above, the receiving element has, on the one hand, a receiving slot for the functional element and, on the other hand, is supported by two retaining portions, the receiving element can expediently have, in particular, flat engaging portions on both sides of the receiving slot, it then being possible to connect the two engaging portions to the retaining portions arranged in pairs.

The particularly flat engaging portions can then simply be pushed in from above in the case of retaining portions in the form of retaining legs open at the top and are then already held downwards due to gravity alone. In addition, a certain clamping effect can be achieved by a suitable shaping of the retaining legs. In principle, it is also conceivable that a certain latching effect is achieved by the shape of the retaining legs or the shape of the engaging portions.

The engaging portions are preferably flatter than the intermediate section, whereby a certain positive locking in the transverse direction can also be achieved in a particularly simple manner, even if a clamping fixation is not necessary with respect to the transverse direction. At least it can be achieved that in the transverse direction, by means of a abutment, the mobility of the receiving element between the two retaining portions arranged in pairs is limited in such a way that a position or a position range is predetermined and the engaging portions cannot be pushed laterally out of the retaining portions.

According to a further development of the invention, it is provided that the at least one receiving element has, in particular, additionally for a receiving means for the functional element, at least one cable mount.

By means of the retaining portions provided on the frame profile and the at least one receiving element cooperating therewith, fundamentally different functional elements can be fastened. According to a preferred embodiment, it is provided that the functional element is designed in the form of a strip and is to be fastened with a plurality of receiving elements spaced apart along the longitudinal axis of the profile.

The functional element and the at least one receiving element can be connected to each other, for example, by a simple snap-in connection.

The functional element can in particular be designed as a monitoring device which monitors the door opening and/or closing. For example, a light curtain can be used to determine whether the path of a closure member is blocked by an obstacle during a closing movement, so that a corresponding closing movement can then be interrupted or is prevented from the outset. It is known that a classic light curtain with transmitting and receiving devices is to be arranged on both sides of the door opening, whereby two functional elements arranged opposite each other then form the light curtain and can be attached to the respective frame profile in the described manner via receiving elements.

It is also an object of the invention to provide a door with the door frame described above and a closure member which can be moved, in particular along a vertical direction, from an open position into a closed position, wherein the closure member can be formed in particular from a curtain, adjoining panels or articulated sections.

As also explained above, it can be provided that a first frame profile having a plurality of retaining portions which are separate from one another and spaced apart from one another is arranged on a first longitudinal side of the closure member which runs essentially in a vertical direction, a plurality of retaining portions each being arranged in pairs along the longitudinal direction of the profile, wherein the retaining portions are in the form of upwardly open retaining legs, wherein a plurality of receiving elements are retained on the first frame profile at a spacing one above the other of in each case two retaining portions arranged in pairs, and wherein a first strip-shaped functional element is secured to the first frame profile with the plurality of receiving elements arranged one above the other. A second strip-shaped functional element can be arranged in the same way on the opposite longitudinal side of the closure member, in which case the first functional element and the second functional element can together form, for example, a light curtain.

The invention is explained below with reference to an exemplary embodiment. It shows:
- Fig. 1: an upwardly opening door with a door frame and a closure member guided thereon,
- Fig.2: a section of a frame profile of the door frame and a receiving element to be fastened thereto,
- Fig. 3: the components according to Fig. 2 in an assembled state,
- Fig. 4: the arrangement according to Fig. 3 with an additionally accommodated functional element,
- Fig. 5: the functional element extending over several receiving elements,
- Fig. 6: a detailed view in the area of an upper end of the functional element,
- Fig. 7: a detailed view of a retaining portion formed on the frame profile.

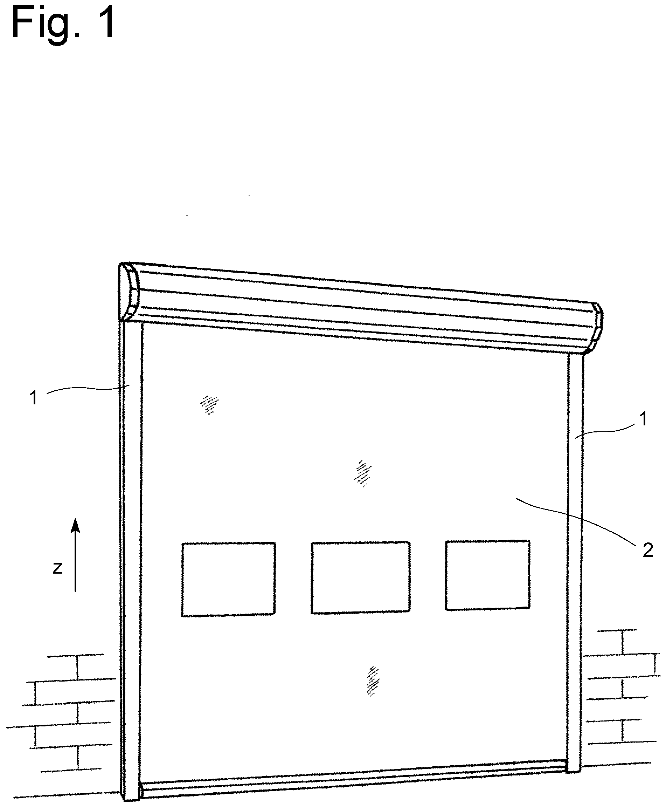

Figure 1 shows an upwardly opening door, which is intended in particular as an industrial door. The door comprises a schematically shown door frame with lateral frame profiles 1, which will be explained in detail below.

The door also comprises a closure member 2 which can be moved along a vertical direction z from an open position to the closed position shown and vice versa. As an example, a roller door with a flexible curtain is shown which, according to Figure 1, closes a door opening and is then rolled up above the door opening when it is opened.

However, industrial doors or garage doors can, for example, also have articulated adjoining panels or hinged sections. Corresponding doors can also be rolled up, pulled straight upwards, transformed into a spiral shape without direct contact of the individual layers or into a plane horizontal or inclined opening position. In a conventional sectional door, it is known that the door is deflected via an curve into a substantially horizontal position above the door opening.

In order to avoid a collision with an obstacle during a closing movement of the closure member 2 shown in Figure 1 and the resulting damage to the door and/or the obstacle or possibly also injuries, the door opening is expediently monitored by a monitoring device. For example, a light curtain can be provided which comprises a functional element 3 in the form of transmitting or receiving devices on both sides of the closure member 2.

The present invention is specifically concerned with a particularly simple and reliable arrangement of such a functional element 3, which may, however, also be provided for a function other than the provision of a light curtain.

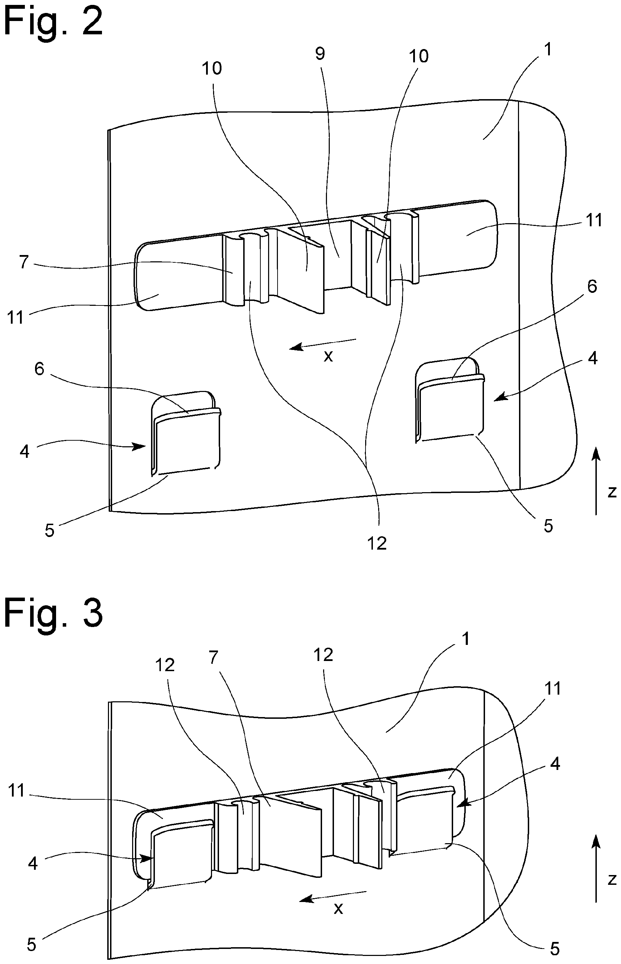

In this context, Figure 2 shows a section of the frame profile 1 on one side of the closure member 2. In the section it can be seen that retaining portions 4 are provided on the frame profile 1, with further retaining portions 4 being provided in the same way above and/or below the section shown.

The longitudinal direction of the profile of the frame profile shown corresponds to the vertical direction z. In the section shown, two retaining portions 4 are arranged as a pair at the same height. The frame profile 1 is made of sheet metal, whereby the retaining portions 4 are formed in a particularly simple manner by sheet metal forming from the material of the frame profile 1 itself. Specifically, the retaining portions 4 in the embodiment shown are formed as retaining legs which run from a leg base 5 to a free end 6. The free ends 6 are provided with an inlet inclination, i.e. the result is an inclined position pointing away from the frame profile 1.

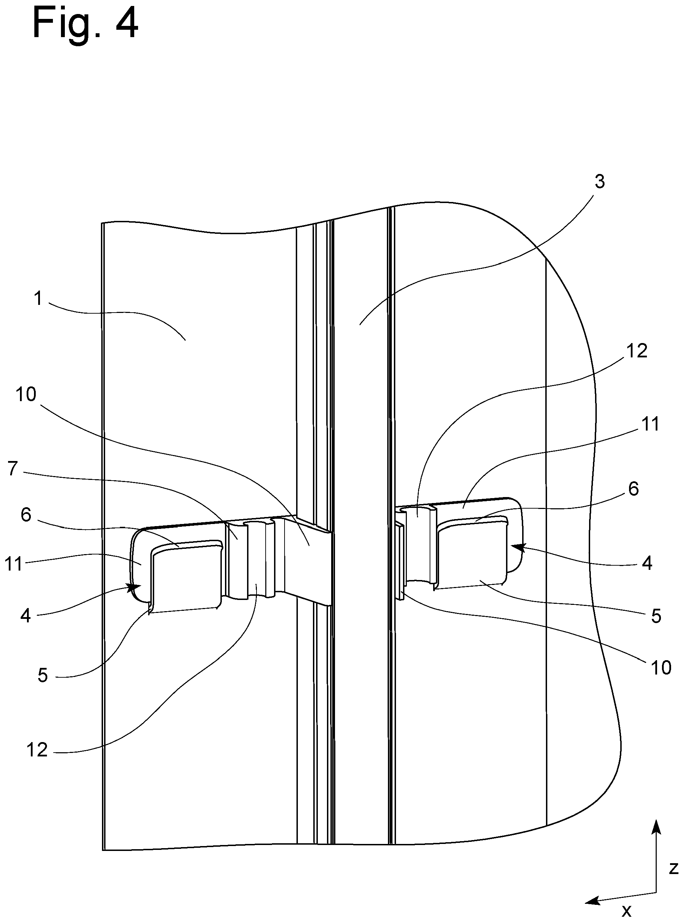

Figure 2 also shows a receiving element 7 made of plastic, for example as an injection-moulded part, which has a receiving slot 9 between flexing tongues 10 for receiving a functional element 3 (see Figure 4 below).

In relation to a transverse direction x of the frame profile 1 running perpendicular to the vertical direction z, the receiving element 7 has flat engaging sections 11 on both sides of the receiving slot 9, which can be pushed behind the retaining legs 4.

It is expedient that the receiving element 7 can also have cable mounts 12, for example for a connecting cable 13, whereby in the embodiment example of Figure 2, two cable mounts 12 for different cable cross-sections are shown as an example, which can then be used alternatively to each other.

Figure 3 shows the receiving element 7 arranged on the retaining portions 4, which is supported downwards by the leg bases 5. The thickness of the engaging sections 11 and the width of the retaining portions 4, which are designed as retaining legs, can also be matched to each other in such a way that a certain clamping effect is achieved, so that the receiving element 7 can only be inserted and also released again with a certain amount of force.

In principle, a complementary shape design also allows a certain locking effect between the retaining portions 4 and the engaging sections 11.

Furthermore, it can be seen that the engaging sections 11 are flatter than the inwardly adjoining cable mounts 12, so that a certain positioning and fixing of the receiving element 7 to the frame profile 1 is also achieved along the transverse direction x. Even if a certain amount of play along the transverse direction x is expedient, a suitable position is provided in the transverse direction x and the engaging sections 11 cannot be pushed laterally out of the retaining portions 4 either.

Finally, Figure 4 shows a section corresponding to Figure 3, whereby the previously mentioned functional element 3 is inserted into the receiving slot and is held there, for example, by the tongues 10. For this purpose - as indicated - interlocking structures can also be provided.

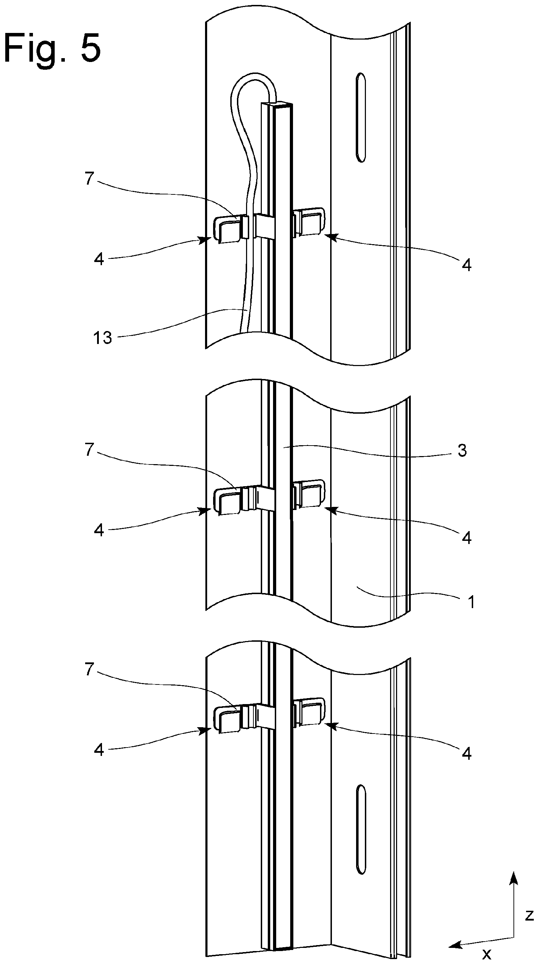

Figure 5 illustrates that the functional element is attached, for example in the form of a transmitting and/or receiving unit of a light curtain, with several receiving portions 7, whereby the individual receiving portions 7 are received by the associated retaining portions as shown in Figure 4.

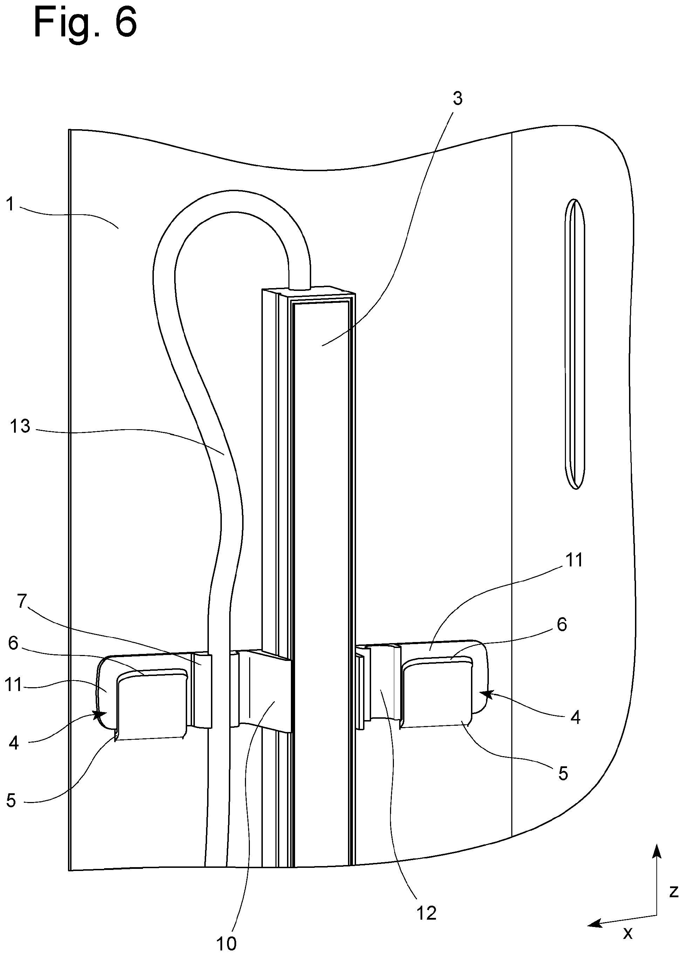

Figure 6 shows as a further detail the guiding of a connecting cable 13.

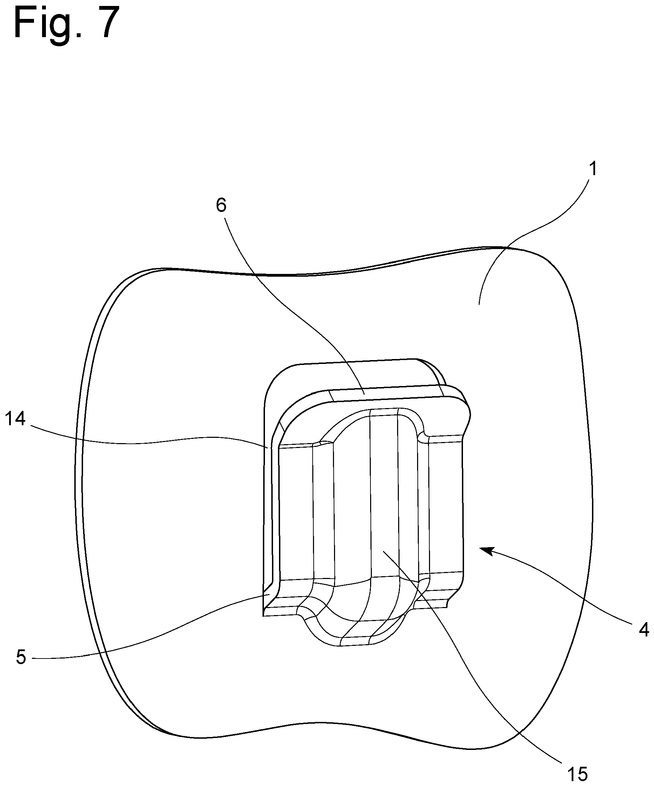

Figures 2 to 6 show a simple design of the retaining portions 4 as retaining legs, which on the one hand is suitable in principle and on the other hand can also be regarded as exemplary for more complex designs. Figure 7 shows a possible design of the retaining portions 4 in the form of retaining legs. As described above, the retaining legs each have a leg base 5 and a free end 6 provided with an inlet inclination. However, it can be seen in the embodiment shown that the retaining portions 4 form a constriction 14 below the free end 6 with respect to the underlying surface of the frame profile 1, this constriction 14 being undersized compared to the thickness of the rear gripping portions 11 and thus enabling a resiliently clamping fixation. The retaining portions 4 also have a central bead 15 to increase stability.

## Claims

1. Door frame for an upwardly opening door with a frame profile (1) having a plurality of retaining portions (4) which are separate from and spaced apart from one another and which extends along a longitudinal direction of the profile (1), with at least one receiving element (7) which is to be arranged by a form fit on at least one associated retaining portion (4) and with a functional element (3) which can be connected to the receiving element (7) in order to be fastened to the frame profile (1).

2. Door frame according to claim 1, wherein the retaining portions (4) are formed as retaining legs extending along the longitudinal direction of the profile from a leg base (5) to a free end (6).

3. Door frame according to claim 1 or 2, wherein the frame profile (1) is made of sheet metal and the retaining portions (4) are formed by sheet metal forming.

4. Door frame according to one of the claims 1 to 3, wherein the frame profile (1) has several pairs of retaining portions (4) along the longitudinal direction of the profile (1).

5. Door frame according to any one of claims 1 to 4, wherein the at least one receiving element (7) has a receiving slot (9) for the functional element (3).

6. Door frame according to claims 4 and 5, wherein the at least one receiving element (7) has engaging portions (11) on both sides of the receiving slot (9), wherein the two engaging portions (11) can be connected to retaining portions (4) arranged in pairs.

7. Door frame according to one of the claims 1 to 6, wherein the at least one receiving element (7) is formed from plastic.

8. Door frame according to one of the claims 1 to 7, wherein the at least one receiving element (7) has at least one cable mount (12).

9. Door frame according to one of the claims 1 to 8, wherein the functional element (3) is designed in the form of a strip and is to be fastened with a plurality of receiving elements (7) spaced apart from one another along the longitudinal axis of the profile.

10. Door frame according to one of the claims 1 to 9, wherein the functional element (3) and the at least one receiving element (7) can be connected by a snap-in connection.

11. Door frame according to one of claims 1 to 10, wherein the functional element (3) is designed as a monitoring device, in particular as a light curtain or component of a light curtain.

12. Upwardly opening door with a door frame according to one of claims 1 to 11 and with a closure member (2) which can be transferred from an open position into a closed position, wherein the closure member (2) is formed from a curtain, adjoining panels or sections connected in an articulated manner.

13. Upwardly opening door according to claim 12, wherein a first frame profile (1) having a plurality of retaining portions (4) separate from and spaced apart from one another is arranged on a first longitudinal side of the closure member (2) extending substantially in a vertical direction (z), wherein the retaining portions (4) are each arranged in pairs along the longitudinal direction of the profile (1), wherein the retaining portions (4) are in the form of upwardly open retaining legs, wherein a plurality of receiving elements (7) are retained on the first frame profile (1) at a spacing one above the other of in each case two retaining portions (4) arranged in pairs, and wherein a first strip-shaped functional element (3) with the plurality of receiving elements (7) arranged one above the other is secured to the first frame profile (1).

14. Upwardly opening door according to claim 13, wherein a second frame profile (1) having a plurality of retaining portions (4) separate from and spaced apart from one another is arranged on a second longitudinal side of the closure element (2) extending substantially in a vertical direction (z), wherein the retaining portions (4) are each arranged in pairs along the longitudinal direction of the profile (1), wherein the retaining portions (4) are in the form of upwardly open retaining legs, wherein a plurality of receiving elements (7) are retained on the second frame profile (1) at a spacing one above the other of in each case two retaining portions (4) arranged in pairs, and wherein a second strip-shaped functional element (3) with the plurality of receiving elements (7) arranged one above the other is fastened to the second frame profile (1).
